# EUROPEAN PATENT SPECIFICATION

(11) **EP 4 412 853 B1**
(45) Date of publication and mention of the grant of the patent: **27.08.2025**
(21) Application number: 21787408.0
(22) Date of filing: 06.10.2021
(51) Int. Cl.: B60L 3/00, B60L 50/50, B60L 50/60, B60L 50/70, B60L 58/32, B60L 58/33

(54) **A METHOD FOR OPERATING A FUEL CELL SYSTEM**
VERFAHREN ZUM BETRIEB EINES BRENNSTOFFZELLENSYSTEMS
PROCÉDÉ DE FONCTIONNEMENT D'UN SYSTÈME DE PILE À COMBUSTIBLE

(43) Date of publication of application: 14.08.2024
(73) Proprietor: VOLVO TRUCK CORPORATION, 405 08 Göteborg (SE)
(72) Inventor: ARYA, Pranav, 437 42 Lindome (SE); LINDBERG, Johan, 415 24 Göteborg (SE)
(74) Representative: Kransell & Wennborg KB
(86) International application number: PCT/EP2021/077497
(87) International publication number: WO 2023/057055

(56) References cited:
- US-A1- 2009 176 135
- US-A1- 2016 006 059
- US-A1- 2018 019 485
- US-A1- 2020 391 876

## Description

### TECHNICAL FIELD

The invention relates to a method for operating a fuel cell system comprising one or more fuel cells and a cooling system with a cooling fluid for cooling the one or more fuel cells during use. The invention also relates to a control unit, a fuel cell system, a vehicle, a computer program and to a computer readable medium.

The invention can be applied in heavy-duty vehicles, such as trucks, buses and construction equipment. Although the invention will be described with respect to a truck, the invention is not restricted to this particular vehicle, but may also be used in other vehicles such as passenger cars.

### BACKGROUND

A fuel cell is an electrochemical cell which converts chemical energy into electricity. The fuel cell converts the chemical energy of a fuel, typically hydrogen, and an oxidizing agent, typically oxygen, into electricity. Accordingly, a fuel cell can be used as an alternative or as a complement to electric batteries. In recent years fuel cells have been considered for powering electric vehicles, such as pure electric vehicles and hybrid electric vehicles.

A fuel cell system which comprises one or more fuel cells is prone to degradation due to start up and shutdown of the system. It is known that degradation increases with longer shutdown durations.

Therefore, there is a strive to develop improved fuel cell related technology which takes at least some of the above concerns into account.

US 2018/019485 A1 discloses a method for operating a fuel cell system.

### SUMMARY

An object of the invention is to provide an improved method for operating a fuel cell system which alleviates at least one drawback of the prior art. In addition, an object of the invention is to provide an improved method for operating a fuel cell system which reduces the degradation of the fuel cell system. Yet further objects of the invention are to provide an improved control unit for operating a fuel cell system, an improved fuel cell system, an improved vehicle, and an improved computer program and/or computer readable medium.

According to a first aspect of the invention, at least one of the objects is achieved by a method according to claim 1.

Thus, a method for operating a fuel cell system comprising one or more fuel cells and a cooling system with a cooling fluid for cooling the one or more fuel cells during use is provided. The method comprises:
- obtaining a shutdown request for the fuel cell system;
- predicting a future shutdown time period;
- in response to detecting that the future shutdown time period is shorter than a predetermined degradation time window for the one or more fuel cells, operating the cooling system so as to reduce the temperature of the one or more fuel cells.

By the provision of a method as disclosed herein, an improved method is achieved in which the degradation of the fuel cell(s) of the fuel cell system can be reduced. For example, the method is based on a realization that the degradation of a fuel cell is not only increased with longer shutdown periods, but that, the degradation may be relatively high also for shorter shutdown time periods. More specifically, the degradation may be relatively high if the fuel cell system is restarted during a time window when it has not yet cooled down enough. As such, in response to detecting that the predicted future shutdown time period is shorter than the predetermined degradation time window, the cooling system is operated to reduce the temperature of the fuel cell(s). Thereby, the otherwise increased degradation caused by restarting the fuel cell system when the fuel cell temperature is too high can be avoided or at least reduced. Consequently, the fuel cell system's service life can thereby be increased. Furthermore, the method is also based on a realization that it is advantageous to predict a future shutdown time period of the fuel system. By making a prediction of for how long the fuel cell system will be shut off, a more proactive and/or energy efficient approach will be achieved. For example, the cooling system can be operated to immediately cool down the one or more fuel cells when the shutdown request is obtained. Thereby, the fuel cell system can be restarted as predicted without unnecessary degradation. Consequently, this may also avoid postponing the restart of the fuel cell system due to too high fuel cell temperatures. In addition, the prediction may also result in that the cooling system is not operated if it is detected that the predicted future shutdown time period is longer than the predetermined degradation time window, implying a more energy efficient approach.

Degradation of a fuel cell can be expressed as a function of shutdown duration of the fuel cell, wherein the shutdown duration, or shutdown time period, is the duration from a point in time when the fuel cell is shut off to a later point in time when the fuel cell is restarted. Accordingly, a degradation time window for the one or more fuel cells may be a time window from a point in time associated with when the one or more fuel cells is/are shut off to a later point in time associated with when the one or more fuel cells is/are restarted, wherein the point in time when the one or more fuel cells is/are restarted is associated with a specific degradation level for the one or more fuel cells.

The predetermined degradation time window is preferably a time window from a first point in time associated with when the one or more fuel cells is/are shut off to a later second point in time associated with when the degradation level has decreased to a specific lower degradation level with respect to a degradation level at the first point in time. For example, the second point in time may be a point in time when the degradation level reaches a first substantially constant degradation level. Accordingly, the degradation level is higher if the fuel cell(s) is/are shut off at a point in time within the predetermined degradation time window, as compared to if the fuel cell is shut off at a point in time directly after the predetermined degradation window.

Optionally, the cooling system may be operated until a target temperature of the one or more fuel cells is reached. Still optionally, the target temperature of the one or more fuel cells may correspond to a target temperature of the cooling fluid. Thereby, a simplified cooling control can be achieved since the temperature of the cooling fluid may be easier to determine than the actual temperature of the one or more fuel cells. Still optionally, the target temperature may be determined as a function of the shutdown time period for the one or more fuel cells. Thereby, the cooling system can be operated to different target temperatures of the one or more fuel cells depending on the shutdown time period, i.e. the predicted future shutdown time period.

Optionally, operating the cooling system so as to reduce the temperature of the one or more fuel cells may comprise powering the cooling system by the one or more fuel cells while the one or more fuel cells is/are running, and in response to determining that cooling of the one or more fuel cells is complete, initiating a shutting down procedure of the one or more fuel cells and the cooling system. Thereby, the cooling system can be operated directly by power from the one or more fuel cells, not requiring any auxiliary power source for the cooling system. Still optionally, powering the cooling system by the one or more fuel cells while the one or more fuel cells is/are running comprises running the one or more fuel cells so as to generate less power compared to power generated before obtaining the shutdown request. Thereby, the temperature of the one or more fuel cells may be reduced more rapidly and/or less energy may be required for the temperature reduction. For example, the one or more fuel cells may be run at a power level corresponding to a minimum power level required to operate the cooling system.

Optionally, operating the cooling system so as to reduce the temperature of the one or more fuel cells may comprise powering the cooling system by an auxiliary power source, such as by a battery. This enables for example the one or more fuel cells to be shut off before the cooling operation is initiated, implying reduced time for reducing the temperature of the one or more fuel cells. As such, and still optionally, the method may further comprise initiating a shutting down procedure of the one or more fuel cells before operating the cooling system so as to reduce the temperature of the one or more fuel cells.

Optionally, powering the cooling system by the auxiliary power source may be performed in response to determining that the auxiliary power source has sufficient power and/or energy to operate the cooling system. Thereby, a more efficient method may be achieved, implying that the battery is the prioritized power source for the cooling operation by the cooling system.

Optionally, predicting the future shutdown time period may be based on at least one of the following:
- manual input from an operator;
- traffic information relating to a vehicle in which the fuel cell system is provided;
- terrain information relating to a vehicle in which the fuel cell system is provided;
- map data relating to a vehicle in which the fuel cell system is provided; and
- historical vehicle and/or operator behavior data.

For example, an operator, such as a driver of a vehicle comprising the fuel cell system, may in relation to a lunch break provide information about for how long time the lunch break will last. This prediction may then be used to detect if the lunch break is shorter than the predetermined degradation time window. The manual input may for example be provided via a human machine interface (HMI). Traffic information relating to a vehicle in which the fuel cell system is provided may for example comprise information about traffic jams when the fuel cell system is temporarily shut off to reduce energy consumption. Map data relating to a vehicle in which the fuel cell system is provided may for example be used to predict oncoming downhill road segments when the fuel cell system is temporarily shut off to reduce energy consumption. Historical vehicle and/or operator behavior data may additionally or alternatively be used to predict when the fuel cell system will be shut off and for how long time it will be shut off.

Optionally, the predetermined degradation time window for the one or more fuel cells may be variable and varies with respect to detected and/or predicted ambient conditions, such as ambient temperature and/or ambient humidity. Thereby, a further improved method may be achieved which is better adapted to the ambient conditions, implying reduced degradation of the one or more fuel cells.

According to a second aspect of the invention, at least one of the objects is achieved by a control unit according to claim 12.

Thus, a control unit for operating a fuel cell system comprising one or more fuel cells and a cooling system with a cooling fluid for cooling the one or more fuel cells during use is provided. The control unit is configured to perform the method according to any one of the embodiments of the first aspect of the invention.

Advantages and effects of the second aspect of the invention are largely analogous to the advantages and effects of the fist aspect of the invention.

According to a third aspect of the invention, at least one of the objects is achieved by a fuel cell system according to claim 13.

Thus, a fuel cell system comprising one or more fuel cells and a cooling system with a cooling fluid for cooling the one or more fuel cells during use is provided. The fuel cell system further comprises a control unit according to any one of the embodiments of the second aspect of the invention.

Advantages and effects of the third aspect of the invention are largely analogous to the advantages and effects of the first and second aspects of the invention. Furthermore, all embodiments of the third aspect of the invention are combinable with all embodiments of the first and second aspects of the invention, and vice versa.

Optionally, the fuel cell system may further comprise a temperature sensor for measuring a temperature indicative of the temperature of the one or more fuel cells. For example, the temperature sensor may be a temperature sensor which measures the temperature of the cooling fluid, such as the temperature of the cooling fluid downstream the one or more fuel cells, such as downstream a heat exchanger for the one or more fuel cells, e.g. directly after the cooling fluid has passed the one or more fuel cells and/or the heat exchanger for the one or more fuel cells. Additionally, or alternatively, a temperature sensor may also be provided upstream the one or more fuel cells, such as upstream a heat exchanger for the one or more fuel cells, e.g. just before the cooling fluid enters the one or more fuel cells and/or the heat exchanger for the one or more fuel cells. Additionally, or alternatively, a temperature sensor may also be provided directly on a heat exchanger for the one or more fuel cells, or at any other location close to or inside the one or more fuel cells.

According to a fourth aspect of the invention, at least one of the objects is achieved by a vehicle according to claim 15.

Thus, a vehicle comprising the fuel cell system according to any one of the embodiments of the third aspect of the invention and/or being in communication with a control unit according to any one of the embodiments of the second aspect of the invention is provided.

Advantages and effects of the fourth aspect are largely analogous to the advantages and effects of the first, second and third aspects of the invention. Furthermore, all embodiments of the fourth aspect of the invention are combinable with all embodiments of the first, second and third aspects of the invention, and vice versa.

According to a fifth aspect of the invention, at least one of the objects is achieved by a computer program according to claim 16.

Thus, a computer program comprising program code means for performing the method of any one of the embodiments of the first aspect of the invention when said program is run on the control unit of any one of the embodiments of the second aspect of the invention is provided.

According to a sixth aspect of the invention, at least one of the objects is achieved by a computer readable medium according to claim 17.

Thus, a computer readable medium carrying a computer program comprising program code means for performing the method of any one of the embodiments of the first aspect of the invention when said program product is run on the control unit of any one of the embodiments of the second aspect of the invention is provided.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an example embodiment of the invention,
Fig. 2 is a schematic view of fuel cell system according to an example embodiment of the invention,
Fig. 3 is a flowchart of a method according to an example embodiment of the present invention,
Fig. 4 is a diagram illustrating an example of degradation level as a function of shutdown time period of a fuel cell system and/or fuel cell,
Fig. 5 is a diagram illustrating target temperature of a fuel cell as a function of shutdown time period of a fuel cell system and/or fuel cell,
Fig. 6 is a flowchart of a method according to an example embodiment of the invention, and
Fig. 7 is a flowchart of another example embodiment of the invention.

### DETAILED DESCRIPTION OF EXAMPLE EMBODIMENTS OF THE INVENTION

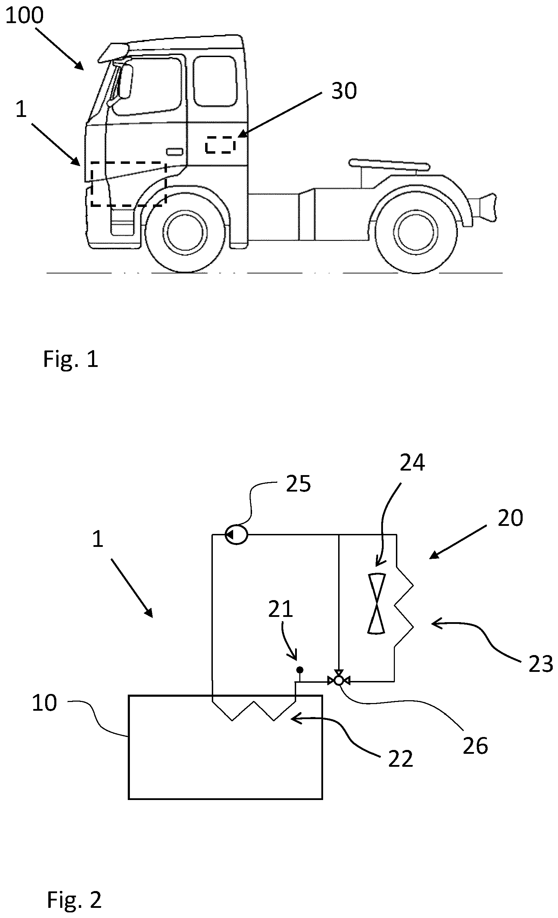

Fig. 1 depicts a side view of a vehicle 100 according to an example embodiment of the invention. The vehicle 100 is here a truck, more specifically a heavy-duty truck for towing one or more trailers (not shown). Even though a heavy-duty truck 100 is shown it shall be noted that the invention is not limited to this type of vehicle but may be used for any other type of vehicle, such as a bus, construction equipment, e.g. a wheel loader and an excavator, and a passenger car. The invention is also applicable for other applications not relating to vehicles as long as a fuel cell system is utilized. However, the invention has shown to be particularly advantageous for vehicles since vehicles are frequently shut down and restarted during use.

The vehicle 100 comprises a fuel cell system 1 according to an example embodiment of the invention. The fuel cell system 1 is here used for powering one or more electric motors (not shown) which are used for creating a propulsion force to the vehicle 100. The fuel cell system 1 may additionally or alternatively be used for powering other electric power consumers of the vehicle, such as an electric motor for a refrigerator system, an electric motor for an air conditioning system or any other electric power consuming function of the vehicle 100.

The vehicle 100 further comprises a control unit 30 according to an example embodiment of the invention. The control unit 30 is thus used for operating the fuel cell system 1. Even though an on-board control unit 30 is shown, it shall be understood that the control unit 30 could also be a remote control unit 30, i.e. an off-board control unit, or a combination of an on-board and off-board control unit. The control unit 30 may be configured to control the fuel cell system 1 by issuing control signals and by receiving status information relating to the fuel cell system 1.

The control unit 30 is an electronic control unit and may comprise processing circuitry which is adapted to run a computer program as disclosed herein. The control unit 30 may comprise hardware and/or software for performing the method according to the invention. In an embodiment the control unit 30 may be denoted a computer. The control unit 30 may be constituted by one or more separate sub-control units. In addition, the control unit 30 may communicate by use of wired and/or wireless communication means.

Fig. 2 depicts a schematic illustration of a fuel cell system 1 according to an example embodiment of the invention. The fuel cell system 1 may for example be used in the vehicle 100 as shown in fig. 1.

The fuel cell system 1 comprises one or more fuel cells 10, typically several fuel cells. The fuel cells 10 may also be denoted as a fuel cell stack, wherein the fuel cell stack may comprise several hundreds of fuel cells. The fuel cell system 1 further comprises a cooling system 20 with a cooling fluid for cooling the one or more fuel cells 10 during use. In addition, the fuel cell system 1 further comprises a control unit (not shown in fig. 2) which is configured to perform a method according to an embodiment of the invention. The control unit may be the control unit 30 shown in fig. 1.

As shown, the cooling system 20 may comprise a heat exchanger 22 which is provided at the one or more fuel cells 10 and adapted to transfer heat from the one or more fuel cells to the cooling fluid. The cooling system 20 as shown further comprises an additional heat exchanger 23, or radiator, and a fan 24 for blowing air over the heat exchanger 23, thereby cooling the cooling fluid. The cooling system 20 further comprises a pump 25 for pumping the cooling fluid, in the shown embodiment in a counter-clockwise direction. In addition, as shown, the cooling system 20 may comprise at least one valve 26, such as a bypass valve, arranged to bypass the cooling fluid with respect to the additional heat exchanger 23. The pump 25, the valve 26 and the fan 24 are controlled by the aforementioned control unit for operating the cooling system 20.

As shown in fig. 2, the fuel cell system 1 may further comprise a temperature sensor 21 for measuring a temperature indicative of the temperature of the one or more fuel cells 10. In the shown embodiment, the temperature sensor 21 is located downstream the heat exchanger 22 and upstream the valve 26. It shall however be understood that a temperature sensor could additionally or alternatively be located somewhere else in the fuel cell system 1 as long it can measure a temperature which is indicative of the temperature of the one or more fuel cells 10.

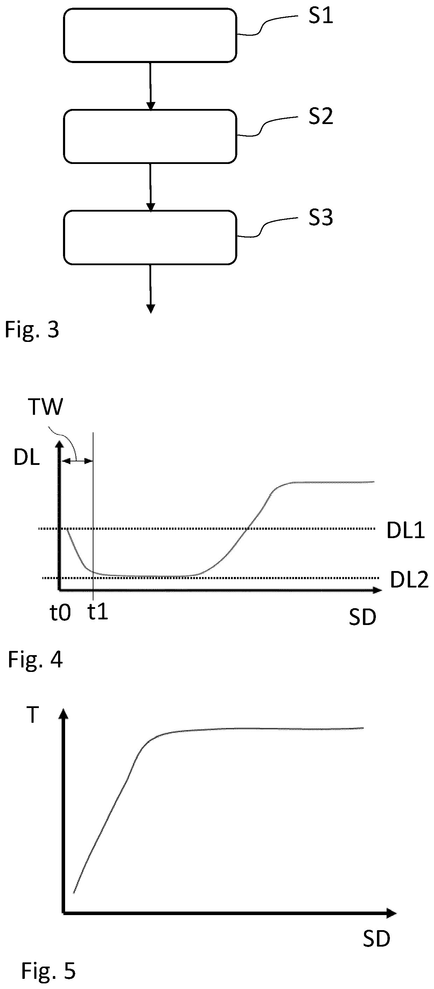

Fig. 3 depicts a flowchart of a method according to an example embodiment of the invention. Thus, the flowchart represents a method for operating a fuel cell system 1 comprising one or more fuel cells 10 and a cooling system 20 with a cooling fluid for cooling the one or more fuel cells 10 during use. The method comprises:
S1) obtaining a shutdown request for the fuel cell system 1;
S2) predicting a future shutdown time period; and
   - in response to detecting that the future shutdown time period is shorter than a predetermined degradation time window TW for the one or more fuel cells 10,
S3) operating the cooling system 10 so as to reduce the temperature of the one or more fuel cells 10.

The shutdown request may for example be a request from an operator, e.g. a driver of the vehicle 100. The shutdown request may additionally or alternatively be provided from a vehicle control system, such as from start/stop system which requests to temporarily shut down the fuel cell system 1, e.g. during a downhill segment or when stopping at a traffic light.

Fig. 4 depicts a diagram, or graph, illustrating the degradation level DL as a function of the shut down time period SD. As shown, the degradation level DL is represented along a y-axis and the shutdown time period is represented along an x-axis. The predetermined degradation time window TW is also shown in fig. 4 and is here a time window from a first point in time t0 when the one or more fuel cells 10 is/are shut off to a later second point in time t1 when the degradation level has decreased to a specific lower degradation level DL2 with respect to a degradation level DL1 at the first point in time t0. As shown, the second point in time t1 may be a point in time when the degradation level reaches a first substantially constant degradation level. Accordingly, the degradation level is higher in the predetermined degradation time window TW compared to the degradation level directly after the predetermined degradation time window TW.

As shown in fig. 4, the degradation level may increase again when the one or more fuel cells 10 have been shut off for a specific time period, and thereafter the degradation level may reach a second constant degradation level.

The degradation level as a function of the shutdown time period may vary between different fuel cell systems and may for example be obtained by empirical tests. Additionally, or alternatively, the degradation level as a function of the shutdown time period may vary based on different shutdown strategies adopted in different fuel cell systems.

The cooling system 10 may be operated until a target temperature of the one or more fuel cells 10 is reached. For example, the target temperature of the one or more fuel cells 10 may correspond to a target temperature of the cooling fluid and may be measured by the temperature sensor 21 shown in fig. 2.

The target temperature may be determined as a function of the shutdown time period for the one or more fuel cells 10. An example of a diagram, or graph, illustrating the target temperature T as a function of the shutdown time period SD for the one or more fuel cells 10 is shown in fig. 5. The rationale behind the function is that for shorter shutdown time periods the one or more fuel cells 10 will require more cooling as the time for natural/self-cooldown of the one or more fuel cells is less than for longer shutdown time periods. The plateau of the curve indicates when there is no need of providing cooling after the shut down since it will not reduce the degradation, i.e. for longer shutdown time periods.

Purely by way of example, an operating temperature of the one or more fuel cells 10 may be in the range of 70-85 degrees Celsius, and the target temperature of the one or more fuel cells after a shutdown time period may be in the range of 35-50 degrees Celsius.

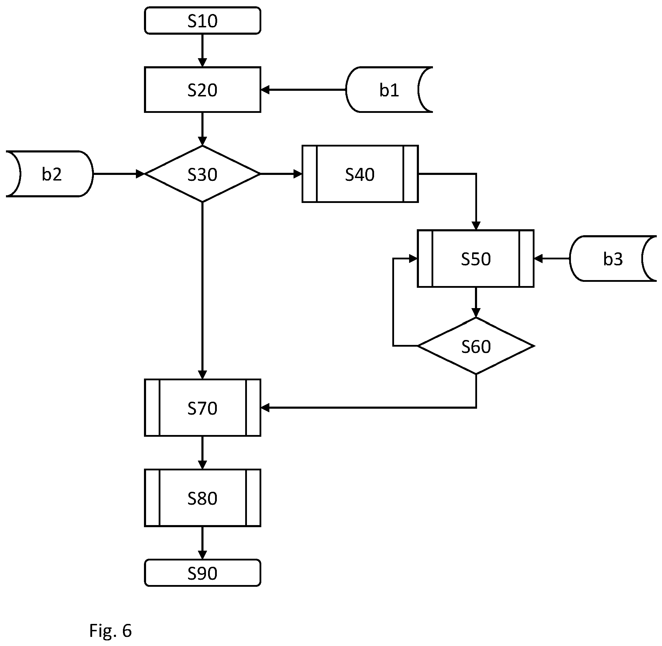

Fig. 6 shows an example embodiment of the invention when the cooling system 20 is only operated by use of power from the one or more fuel cells 10.

The method as shown comprises:
S10) obtaining a shutdown request for the fuel cell system 1, and
S20) predicting a future shutdown time period.

The future shutdown time period may be predicted based on at least one of the following information, represented by the box b1:
- manual input from an operator, such as a driver;
- traffic information relating to a vehicle in which the fuel cell system is provided;
- terrain information relating to a vehicle in which the fuel cell system is provided;
- map data relating to a vehicle in which the fuel cell system is provided; and
- historical vehicle and/or operator behavior data.

Furthermore, in S30 it is detected or determined if the future shutdown time period is shorter than a predetermined degradation time window TW for the one or more fuel cells 10. If the answer is yes, the method continues to S40 where the power level of the one or more fuel cells 10 is reduced to a minimum power level required to run the cooling system 20. The predetermined degradation time window TW is provided from b2 and may vary e.g. depending on ambient conditions, such as ambient temperature and/or humidity.

Thereafter, in S50, the cooling system 20 is operated so as to reduce the temperature of the one or more fuel cells 10, such as to the above-mentioned target temperature. The target temperature is provided from b3, and is here determined as a function of the shutdown time period as e.g. shown in fig. 5.

In S60 it is determined if the target temperature has been reached. If no, the method is returned to S50 such that the cooling system 20 is continued to be operated. However, once the target temperature is reached, the method is continued to S70 where a shutting down procedure of the one or more fuel cells 10 is initiated. In S80 a cooling system 20 shutting down procedure is initiated.

In S90, the method is complete.

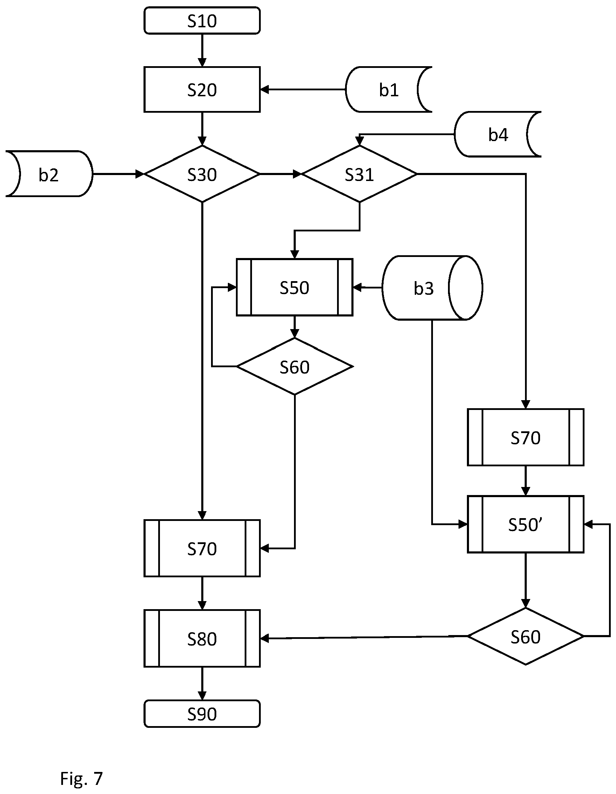

Fig. 7 depicts an alternative embodiment where an auxiliary power source is used for powering the cooling system 20 so as to reduce the temperature of the one or more fuel cells 10 according to the invention. The auxiliary power source may be an electric battery, such as a lithium-ion battery. Boxes with the same reference as in fig. 6 are the same or similar steps as already described.

The method in fig. 7 differs in that it comprises a step S31 where it is determined if the auxiliary power source has sufficient power and/or energy to operate the cooling system 20. This may be determined by information, indicated by the box b4, which e.g. indicates the availability of the auxiliary power source, e.g. if it has enough State of Charge (SoC). If the answer is no, the cooling system 20 is operated in S50 by power from the one or more fuel cells 10, and then the method is continued as e.g. described in relation to fig. 6. Optionally, S40 as mentioned with respect to fig. 6 may be performed before S50 is initiated.

However, if it is determined in S31 that the auxiliary power source has sufficient power and/or energy, the method is continued to S70 where a shutting down procedure of the one or more fuel cells 10 is initiated.

Thereafter, in S50', the cooling system 20 is operated so as to reduce the temperature of the one or more fuel cells 10, such as to the above-mentioned target temperature.

However, the cooling system 20 is now powered by the auxiliary power source, and not by the one or more fuel cells as it is in S50 described above. After S50', it is again checked when the target temperature is reached, as also described in the above.

Finally, the cooling system shutting down procedure is initiated in S80 as also described in the above, whereafter the method is completed in S90.

It is to be understood that the present invention is not limited to the embodiments described above and illustrated in the drawings; rather, the skilled person will recognize that many changes and modifications may be made within the scope of the appended claims.

## Claims

1. A method for operating a fuel cell system (1) comprising one or more fuel cells (10) and a cooling system (20) with a cooling fluid for cooling the one or more fuel cells during use, the method comprising:
- obtaining (S1) a shutdown request for the fuel cell system (1);
- predicting (S2) a future shutdown time period;
- in response to detecting that the future shutdown time period is shorter than a predetermined degradation time window (TW) for the one or more fuel cells (10), operating (S3) the cooling system so as to reduce the temperature of the one or more fuel cells (10).

2. The method according to claim 1, wherein the cooling system is operated until a target temperature of the one or more fuel cells (10) is reached.

3. The method according to claim 2, wherein the target temperature of the one or more fuel cells (10) corresponds to a target temperature of the cooling fluid.

4. The method according to any one of claims 2 or 3, wherein the target temperature is determined as a function of the shutdown time period for the one or more fuel cells (10).

5. The method according to any one of the preceding claims, wherein operating the cooling system (20) so as to reduce the temperature of the one or more fuel cells (10) comprises powering the cooling system (20) by the one or more fuel cells (10) while the one or more fuel cells is/are running (10), and in response to determining that cooling of the one or more fuel cells (10) is complete, initiating a shutting down procedure of the one or more fuel cells (10) and the cooling system (20).

6. The method according to claim 5, wherein powering the cooling system (20) by the one or more fuel cells (10) while the one or more fuel cells (10) is/are running comprises running the one or more fuel cells (10) so as to generate less power compared to power generated before obtaining the shutdown request.

7. The method according to any one of claims 1-4, wherein operating the cooling system (20) so as to reduce the temperature of the one or more fuel cells (10) comprises powering the cooling system (20) by an auxiliary power source, such as by a battery.

8. The method according to claim 7, further comprising initiating a shutting down procedure of the one or more fuel cells (10) before operating the cooling system (20) so as to reduce the temperature of the one or more fuel cells (10).

9. The method according to any one of claims 7-8, wherein powering the cooling system (20) by the auxiliary power source is performed in response to determining that the auxiliary power source has sufficient power and/or energy to operate the cooling system (20).

10. The method according to any one of the preceding claims, wherein predicting the future shutdown time period is based on at least one of the following:
- manual input from an operator;
- traffic information relating to a vehicle in which the fuel cell system is provided;
- terrain information relating to a vehicle in which the fuel cell system is provided;
- map data relating to a vehicle in which the fuel cell system is provided; and
- historical vehicle and/or operator behavior data.

11. The method according to any one of the preceding claims, wherein the predetermined degradation time window (TW) for the one or more fuel cells (10) is variable and varies with respect to detected and/or predicted ambient conditions, such as ambient temperature and/or ambient humidity.

12. A control unit (30) for operating a fuel cell system (1) comprising one or more fuel cells (10) and a cooling system (20) with a cooling fluid for cooling the one or more fuel cells (10) during use, wherein the control unit is configured to perform the method according to any one of the preceding claims.

13. A fuel cell system (1) comprising one or more fuel cells (10) and a cooling system (20) with a cooling fluid for cooling the one or more fuel cells (10) during use, wherein the fuel cell system (1) further comprises a control unit (30) according to claim 12.

14. The fuel cell system (1) according to claim 13, further comprising a temperature sensor (21) for measuring a temperature indicative of the temperature of the one or more fuel cells (10).

15. A vehicle (100) comprising the fuel cell system (1) according to any one of claims 13-14 and/or being in communication with a control unit according to claim 12.

16. A computer program comprising program code means for performing the method of any of claims 1-11 when said program is run on the control unit of claim 12.

17. A computer readable medium carrying a computer program comprising program code means for performing the method of any of claims 1-11 when said program product is run on the control unit of claim 12.

## Patentansprüche

1. Verfahren zum Betrieb eines Brennstoffzellensystems (1) umfassend eine oder mehrere Brennstoffzellen (10) und ein Kühlsystem (20) mit einer Kühlflüssigkeit zum Kühlen der einen oder mehreren Brennstoffzellen während der Verwendung, das Verfahren umfassend:
- Erhalten (S1) einer Abschaltanforderung für das Brennstoffzellensystem (1);
- Vorhersagen (S2) einer zukünftigen Abschaltzeitdauer;
- als Reaktion auf das Erfassen, dass die zukünftige Abschaltzeitdauer kürzer ist als ein vorbestimmtes Abbauzeitfenster (TW) für die eine oder die mehreren Brennstoffzellen (10), Betreiben (S3) des Kühlsystems, um die Temperatur der einen oder der mehreren Brennstoffzellen (10) zu verringern.

2. Verfahren nach Anspruch 1, wobei das Kühlsystem so lange betrieben wird, bis eine Zieltemperatur der einen oder mehreren Brennstoffzellen (10) erreicht ist.

3. Verfahren nach Anspruch 2, wobei die Zieltemperatur der einen oder mehreren Brennstoffzellen (10) einer Zieltemperatur der Kühlflüssigkeit entspricht.

4. Verfahren nach einem der Ansprüche 2 oder 3, wobei die Zieltemperatur als Funktion der Abschaltzeitdauer für eine oder mehrere Brennstoffzellen (10) bestimmt wird.

5. Verfahren nach einem der vorhergehenden Ansprüche, wobei der Betrieb des Kühlsystems (20) zur Verringerung der Temperatur der einen oder mehreren Brennstoffzellen (10) die Speisung des Kühlsystems (20) durch die eine oder mehreren Brennstoffzellen (10) umfasst, während die eine oder mehreren Brennstoffzellen (10) in Betrieb ist/sind, und als Reaktion auf das Bestimmen, dass das Kühlen der einen oder mehreren Brennstoffzellen (10) abgeschlossen ist, Einleiten eines Abschaltvorgangs der einen oder mehreren Brennstoffzellen (10) und des Kühlsystems (20).

6. Verfahren nach Anspruch 5, wobei die Speisung des Kühlsystems (20) durch die eine oder die mehreren Brennstoffzellen (10), während die eine oder die mehreren Brennstoffzellen (10) in Betrieb sind, das Betreiben der einen oder der mehreren Brennstoffzellen (10) umfasst, um im Vergleich zu der vor dem Erhalt der Abschaltanforderung erzeugten Leistung weniger Leistung zu erzeugen.

7. Verfahren nach einem der Ansprüche 1-4, wobei der Betrieb des Kühlsystems (20) zur Verringerung der Temperatur der einen oder mehreren Brennstoffzellen (10) die Speisung des Kühlsystems (20) durch eine Hilfsenergiequelle, beispielsweise durch eine Batterie, umfasst.

8. Verfahren nach Anspruch 7, ferner umfassend das Einleiten eines Abschaltvorgangs der einen oder mehreren Brennstoffzellen (10) vor dem Betrieb des Kühlsystems (20), um die Temperatur der einen oder mehreren Brennstoffzellen (10) zu verringern.

9. Verfahren nach einem der Ansprüche 7-8, wobei die Speisung des Kühlsystems (20) durch die Hilfsenergiequelle als Reaktion auf das Bestimmen durchgeführt wird, dass die Hilfsenergiequelle über genügend Leistung und/oder Energie zum Betrieb des Kühlsystems (20) verfügt.

10. Verfahren nach einem der vorhergehenden Ansprüche, wobei das Vorhersagen der zukünftigen Abschaltzeitdauer auf mindestens einem der folgenden Punkte beruht:
- manuelle Eingabe durch einen Bediener;
- Verkehrsinformationen in Bezug auf ein Fahrzeug, in dem das Brennstoffzellensystem vorgesehen ist;
- Geländeinformationen in Bezug auf ein Fahrzeug, in dem das Brennstoffzellensystem vorgesehen ist;
- Kartendaten eines Fahrzeugs, in dem das Brennstoffzellensystem vorgesehen ist, und
- historische Daten zum Fahrzeug- und/oder Bedienerverhalten.

11. Verfahren nach einem der vorhergehenden Ansprüche, wobei das vorbestimmte Abbauzeitfenster (TW) für die eine oder die mehreren Brennstoffzellen (10) variabel ist und in Abhängigkeit von den erfassten und/oder vorhergesagten Umgebungsbedingungen, wie z.B. der Umgebungstemperatur und/oder der Umgebungsfeuchtigkeit, variiert.

12. Steuereinheit (30) zum Betrieb eines Brennstoffzellensystems (1) umfassend eine oder mehrere Brennstoffzellen (10) und ein Kühlsystem (20) mit einer Kühlflüssigkeit zum Kühlen der einen oder mehreren Brennstoffzellen (10) während des Betriebs, wobei die Steuereinheit konfiguriert ist, das Verfahren nach einem der vorhergehenden Ansprüche durchzuführen.

13. Brennstoffzellensystem (1) umfassend eine oder mehrere Brennstoffzellen (10) und ein Kühlsystem (20) mit einer Kühlflüssigkeit zum Kühlen der einen oder mehreren Brennstoffzellen (10) während des Betriebs, wobei das Brennstoffzellensystem (1) ferner eine Steuereinheit (30) nach Anspruch 12 umfasst.

14. Brennstoffzellensystem (1) nach Anspruch 13, ferner umfassend einen Temperatursensor (21) zur Messung einer Temperatur, die die Temperatur der einen oder mehreren Brennstoffzellen (10) anzeigt.

15. Fahrzeug (100), das das Brennstoffzellensystem (1) nach einem der Ansprüche 13-14 umfasst und/oder mit einer Steuereinheit nach Anspruch 12 in Verbindung steht.

16. Computerprogramm mit Programmcodemitteln zur Durchführung des Verfahrens nach einem der Ansprüche 1-11, wenn das Programm von der Steuereinheit nach Anspruch 12 ausgeführt wird.

17. Computerlesbares Medium mit einem Computerprogramm, das Programmcodemittel zum Durchführen des Verfahrens nach einem der Ansprüche 1-11 umfasst, wenn das Programmprodukt auf der Steuereinheit nach Anspruch 12 ausgeführt wird.

## Revendications

1. Procédé de fonctionnement d'un système de pile à combustible (1) comprenant une ou plusieurs piles à combustible (10) et un système de refroidissement (20) avec un fluide de refroidissement pour refroidir la ou les piles à combustible pendant l'utilisation, le procédé comprenant les étapes consistant à :
- obtenir (S1) une demande d'arrêt du système de pile à combustible (1) ;
- prévoir (S2) une période d'arrêt future ;
- en réponse à la détection que la période d'arrêt future est plus courte qu'une fenêtre de temps de dégradation prédéterminée (TW) pour la ou les piles à combustible (10), faire fonctionner (S3) le système de refroidissement de manière à réduire la température de la ou des piles à combustible (10).

2. Procédé selon la revendication 1, dans lequel le système de refroidissement fonctionne jusqu'à ce qu'une température cible de la ou des piles à combustible (10) soit atteinte.

3. Procédé selon la revendication 2, dans lequel la température cible de la ou des piles à combustible (10) correspond à une température cible du fluide de refroidissement.

4. Procédé selon l'une quelconque des revendications 2 ou 3, dans lequel la température cible est déterminée en fonction de la période d'arrêt pour la ou les piles à combustible (10).

5. Procédé selon l'une quelconque des revendications précédentes, dans lequel le fonctionnement du système de refroidissement (20) de manière à réduire la température de la ou des piles à combustible (10) comprend l'alimentation en énergie du système de refroidissement (20) par la ou les piles à combustible (10) tandis que la ou les piles à combustible sont en marche (10) et, en réponse à la détermination que le refroidissement de la ou des piles à combustible (10) est terminé, l'initiation d'une procédure d'arrêt de la ou des piles à combustible (10) et du système de refroidissement (20).

6. Procédé selon la revendication 5, dans lequel l'alimentation en énergie du système de refroidissement (20) par la ou les piles à combustible (10) pendant que la ou les piles à combustible (10) est/sont en marche comprend le fonctionnement de la ou des piles à combustible (10) de manière à générer moins d'énergie par rapport à l'énergie générée avant d'obtenir la demande d'arrêt.

7. Procédé selon l'une quelconque des revendications 1 à 4, dans lequel le fonctionnement du système de refroidissement (20) de manière à réduire la température de la ou des piles à combustible (10) comprend l'alimentation du système de refroidissement (20) par une source de courant auxiliaire, telle qu'une batterie.

8. Procédé selon la revendication 7, comprenant en outre l'initiation d'une procédure d'arrêt de la ou des piles à combustible (10) avant de faire fonctionner le système de refroidissement (20) de manière à réduire la température de la ou des piles à combustible (10).

9. Procédé selon l'une quelconque des revendications 7 à 8, dans lequel l'alimentation en énergie du système de refroidissement (20) par la source d'énergie auxiliaire est effectuée en réponse à la détermination du fait que la source de courant auxiliaire possède une puissance et/ou une énergie suffisantes pour faire fonctionner le système de refroidissement (20).

10. Procédé selon l'une quelconque des revendications précédentes, dans lequel la prédiction de la période d'arrêt future est basée sur au moins l'un des éléments suivants :
- la saisie manuelle par un opérateur ;
- des informations routières relatives à un véhicule équipé d'un système de pile à combustible ;
- des informations de terrain relatives à un véhicule dans lequel le système de pile à combustible est installé ;
- des données cartographiques relatives à un véhicule dans lequel le système de pile à combustible est installé ; et
- des données historiques sur le comportement du véhicule et/ou de l'opérateur.

11. Procédé selon l'une quelconque des revendications précédentes, dans lequel la fenêtre de temps de dégradation prédéterminée (TW) pour la ou les piles à combustible (10) est variable et varie en fonction des conditions ambiantes détectées et/ou prédites, telles que la température ambiante et/ou l'humidité ambiante.

12. Unité de commande (30) pour faire fonctionner un système de pile à combustible (1) comprenant une ou plusieurs piles à combustible (10) et un système de refroidissement (20) avec un fluide de refroidissement pour refroidir une ou plusieurs piles à combustible (10) pendant l'utilisation, l'unité de commande étant configurée pour exécuter le procédé selon l'une quelconque des revendications précédentes.

13. Système de pile à combustible (1) comprenant une ou plusieurs piles à combustible (10) et un système de refroidissement (20) avec un fluide de refroidissement pour refroidir la ou les piles à combustible (10) pendant l'utilisation, le système de pile à combustible (1) comprenant en outre une unité de commande (30) selon la revendication 12.

14. Système de pile à combustible (1) selon la revendication 13, comprenant en outre un capteur de température (21) pour mesurer une température indicative de la température de la ou des piles à combustible (10).

15. Véhicule (100) comprenant le système de pile à combustible (1) selon l'une quelconque des revendications 13 à 14 et/ou étant en communication avec une unité de commande selon la revendication 12.

16. Programme informatique comprenant un moyen de code de programme pour exécuter le procédé selon l'une quelconque des revendications 1 à 11 lorsque ledit programme est exécuté sur l'unité de commande selon la revendication 12.

17. Support lisible par ordinateur portant un programme informatique comprenant un moyen de code de programme pour exécuter le procédé selon l'une quelconque des revendications 1 à 11 lorsque ledit produit de programme est exécuté sur l'unité de commande selon la revendication 12.
